# EUROPÄISCHE PATENTANMELDUNG

(11) **EP 1 484 449 A2**
(43) Veröffentlichungstag der Anmeldung: **08.12.2004**
(21) Anmeldenummer: 04008815.5
(22) Anmeldetag: 14.04.2004
(51) Int. Cl.: E02B 8/02

(54) **Vorrichtung zum Abscheiden und Abtransport von Abscheidegut**

(30) Priorität: 02.06.2003 DE 10325115
(71) Anmelder: Hans Huber AG Maschinen- und Anlagenbau, D-92334 Berching (DE)
(72) Erfinder: Kerl, Thomas, 92360 Mühlhausen (DE)
(74) Vertreter: Bergmeier, Werner, Dipl.-Ing.

(57) **Zusammenfassung**

Eine Vorrichtung zum Abscheiden und Abtransport von Abscheidegut aus einer strömenden Flüssigkeit (2), beispielsweise Abwasser, mit zwei endlosen, in die Flüssigkeit (2) eintauchenden, umlaufenden Ketten (7), welche weist jeweils Kettenglieder (15) auf, die mittels Gelenken (16) miteinander verbunden sind. Zwischen den Ketten (7) sind Siebelemente (8) angeordnet, die jeweils an einem Kettenglied (15) einer jeden Kette (7) feststehend befestigt sind. Benachbarte Siebelemente (8) überlappen sich in Laufrichtung der Kette (7) im Bereich der Gelenke (16) der Kettenglieder (15).

## Beschreibung

Die vorliegende Erfindung betrifft eine Vorrichtung zum Abscheiden und Abtransport von Abscheidegut aus einer strömenden Flüssigkeit, beispielsweise Abwasser, mit zwei endlosen, in die Flüssigkeit eintauchenden umlaufenden Ketten, welche jeweils Kettenglieder aufweisen, die mittels Gelenken miteinander verbunden sind und mit zwischen den Ketten angeordneten Siebelementen, die jeweils an einem Kettenglied einer jeden Kette feststehend befestigt sind.

Eine Förderbandfiltereinrichtung, auch Umlaufrechen genannt, zur mechanischen Reinigung einer in einem Kanal strömenden, mit Feststoffen verunreinigten Flüssigkeit, ist beispielsweise aus der EP 0 676 227 B1 bekannt. Derartige Vorrichtungen dienen vor allem zur mechanischen Reinigung strömender Abwässer, wobei der Unterteil der Vorrichtung in die strömende Flüssigkeit eingetaucht ist. Die an der Vorrichtung befestigten Siebelemente werden von dem Abwasser durchströmt, wobei sich das abzuscheidende Gut an den Siebelementen sammelt und dort aus der Flüssigkeit nach oben abtransportiert wird. Um grobe Feststoffe ebenso wie feinkörniges Filtergut aus der Flüssigkeit herausfördern zu können, wurde dementsprechend vorgeschlagen die Filterelemente mit einem konstanten geringen Abstand voneinander anzuordnen. Die so ausgebildeten Filterelemente weisen jedoch weiterhin Flächen auf, welche im Bereich der Umlenkung aufeinanderzubewegt werden und somit zum Quetschen darin befindlicher Verunreinigungen führen können. Diese Stellen müssen wieder gereinigt werden um die Funktionsfähigkeit der Vorrichtung zu gewährleisten. Außerdem müssen die einzelnen Filterelemente sehr exakt zueinander positioniert werden, um gleiche Spaltbreiten zu erhalten und somit das Herausfiltern des Abscheidegutes auch zwischen den Filterelementen definiert durchführen zu können.

Aus der DE 42 00 366 C2 ist ebenfalls eine derartige Vorrichtung zum Abscheiden und Abtransport von Abscheidegut bekannt, welche mit einem umlaufenden Kettentrieb arbeitet, an welchem Siebelemente angeordnet sind. Jedes zweite der Siebelemente ist beweglich an der Kette gelagert und klappt beim Umlenken der Kette bzw. beim Rücklauf der Kette zum Grund der Flüssigkeit von der Kette ab. Nachteilig bei dieser Ausführung ist es, daß die Siebelemente beweglich sein müssen und somit bei einer entsprechenden Verschmutzung gereinigt werden müssen, um wieder funktionsfähig zu sein. Darüber hinaus ist es bei einer Anlagerung von Verschmutzung an den beweglichen oder unbeweglichen Siebelementen möglich, daß Spalte zwischen den einzelnen Siebelementen entstehen, welche in Abhängigkeit von der Größe der Verschmutzung unterschiedlich groß sind und somit nicht für einen gleichmäßigen Siebvorgang sorgen können. Außerdem ist der Bereich der Kette nicht abgedichtet, so daß Abscheidegut der Flüssigkeit durch die Kette hindurchströmen und somit ungereinigt die Vorrichtung passieren kann. Es kann hierbei die Kette selbst verschmutzt und in ihrer Funktionsfähigkeit beeinträchtigt werden.

Aufgabe der vorliegenden Erfindung ist es daher eine Vorrichtung zum Abscheiden und Abtransport von Abscheidegut aus einer strömenden Flüssigkeit zu schaffen, welche eine gleichmäßige Reinigungswirkung aufweist und darüber hinaus weitgehend wartungsarm ist.

Die Aufgabe wird gelöst mit Vorrichtungen mit den Merkmalen der unabhängigen Ansprüche.

Erfindungsgemäß sind bei einer Vorrichtung zum Abscheiden und Abtransport von Abscheidegut aus einer strömenden Flüssigkeit, beispielsweise Abwasser, zwei endlose Ketten vorhanden, welche in die Flüssigkeit eintauchen und umlaufen. Jede der Ketten weist Kettenglieder auf, die mittels Gelenken miteinander verbunden sind. Zwischen den Ketten angeordnete Siebelemente sind an jeweils einem Kettenglied einer jeden Kette feststehend befestigt. Hierdurch wird vermieden, daß die Siebelemente undefinierte Bewegungen vollführen können und Abscheidegut die Lage der Siebelemente beeinflussen könnte. Die Siebelemente sind daher fest und unbeweglich mit den Kettengliedern verbunden.

Um das Filtern des Abscheidegutes an den Siebelementen gleichbleibend durchführen zu können, ist erfindungsgemäß vorgesehen, daß sich benachbarte Siebelemente in Laufrichtung der Kette im Bereich der Gelenke der Kettenglieder überlappen. Bei der Bewegung der Kette zwischen zwei Umlenkrädern, d.h. im Bereich eines geradlinigen Verlaufs der Kette wird eine weitgehend vollständige Rückhaltung des Abscheidegutes erzielt. Durch das Überlappen der Siebelemente wird eine Art Labyrinthdichtung erzeugt, wodurch es der Flüssigkeit erschwert und damit insbesondere auch dem Abscheidegut verhindert ist, in dem Bereich zwischen zwei Siebelementen die Vorrichtung zu durchdringen. Die meiste Flüssigkeit muß hierdurch zwangsweise durch die Siebelemente selbst fließen und bewirkt hierdurch ein gleichmäßiges Filtern des Abscheidegutes von der Flüssigkeit entsprechend der vorgesehenen Öffnungen in dem Siebelement.

In dem Bereich der Umlenkungen der Kette um die endlose Kette wieder in die Flüssigkeit hinein oder aus der Flüssigkeit heraus zu führen, öffnet sich der überlappte Bereich der Siebelemente je nach Größe des Umlenkrades und der Art der Überlappung mehr oder weniger. Hierdurch kann alleine durch die konstruktive Gestaltung beeinflußt werden, ob weiterhin auch in den Umlenkstellen eine Überlappung und damit eine Art Labyrinthdichtung aufrechterhalten werden soll, oder ob ein Zwischenraum zwischen zwei benachbarten Siebelementen geöffnet werden soll. Durch den Effekt, daß einerseits die benachbarten Siebelemente durch ihre Überlappung verhindern, daß Abscheidegut in bedeutender Menge durch die Vorrichtung hindurchdringen kann und andererseits durch die Bewegung der Siebelemente im Bereich ihrer Überlappung beim Umlenken der Kette einen Reinigungseffekt erzielt, ist die erfindungsgemäße Vorrichtung besonders wartungsarm und zuverlässig in ihrer Wirkungsweise.

Ganz besonders vorteilhaft ist es, wenn sich die benachbarten Siebelemente berührungslos überlappen. Ein Verschleiß oder eine Beschädigung der Kanten der Siebelemente wird hierdurch weitgehend vermieden. Die Filterwirkung wird jedoch aufrechterhalten, wenn die Kanten der Siebelemente im überlappten Zustand der geradlinig verlaufenden Kette eng, jedoch berührungslos aneinander liegen.

Bilden die sich überlappenden Siebelemente im geradlinigen Verlauf der Ketten einen im wesentlich geschlossenen Hohlraum, auch wenn sich die Siebelemente ggf. gerade nicht berühren, so wird ein besonders vorteilhafter Labyrinthdichtungseffekt erzielt. Abscheidegut kann zwischen den Siebelemente kaum hindurchdringen. Die Reinigungswirkung in bezug auf die strömende Flüssigkeit ist dadurch besonders hoch.

Bilden die sich überlappenden Siebelemente im umgelenkten Verlauf der Ketten einen offenen Hohlraum oder eine im wesentlichen ununterbrochene fortlaufende Oberfläche, so ist die Reinigung des Hohlraums sehr leicht möglich. An der außerhalb der Flüssigkeit liegenden Umlenkstelle können besondere Reinigungsvorrichtungen auf diesen Überlappungsbereich einwirken. In der unterhalb der Flüssigkeitsoberfläche liegenden Umlenkung der Kette kann die Reinigung durch die strömende Flüssigkeit oder bereits allein durch die Relativbewegung der Siebelemente zueinander erfolgen.

Als Reinigungsvorrichtung für die Vorrichtung ist es von Vorteil, wenn im Bereich der Umlenkung der Kette eine insbesondere rotierende Bürste angeordnet ist. Die Bürste reinigt dabei neben den Siebelementen selbst auch den geöffneten Hohlraum bzw., je nach Ausführung, die im wesentlichen ununterbrochen fortlaufende Oberfläche der Siebelemente auch im Bereich der sich überlappenden Enden der Siebelemente.

Vorteilhaft ist es, wenn das Siebelement im wesentlichen außerhalb der Ebene der Ketten liegt. Hierdurch wird das Öffnen der Überlappung zweier benachbarter Siebelemente im Bereich der Umlenkung der Kette ohne weitere bauliche Maßnahmen bewirkt.

Besonders einfach läßt sich ein erfindungsgemäßes Siebelement herstellen, wenn das Siebelement gelochte Siebflächen aufweist. Die Lochung kann entsprechend der abzuscheidenden Verunreinigungen der Flüssigkeit gewählt werden. Außerdem können bestimmte Flächen ein Lochmuster aufweisen, während andere Flächen des Siebelements ungelocht bleiben.

Um den Überlappungsbereich weitgehend abzudichten, ist es vorteilhaft, wenn die einander zugewandten Enden benachbarter Siebelemente im Bereich ihrer Überlappung ungelocht sind. Hierdurch wird der Labyrinthdichtungseffekt erzielt und vermieden, daß Verunreinigungen zwischen den Siebelementen die Vorrichtung durchdringen könnten.

Um ein besonders stabiles Siebelement erzeugen zu können und gleichzeitig bereits eine Fläche der Überlappung schaffen zu können, ist vorteilhafterweise vorgesehen, daß zumindest ein Ende des Siebelementes in Richtung auf das benachbarte Siebelement abgekantet ist. Die Herstellung des Siebelementes kann hierdurch relativ kostengünstig erfolgen.

Um eine besonders hohe Siebwirkung zu erzielen, ist es vorteilhaft, wenn das Siebelement in von der Kette abgewandter Richtung gewölbt ausgebildet ist. Hierdurch wird besonders vorteilhaft bewirkt, daß das Abscheidegut an dem Siebelement gut haftet und aus der Flüssigkeit nach oben abtransportiert werden kann.

Um das Siebelement besonders einfach an den Kettengliedern befestigen zu können, ist das Siebelement an den Enden, welche den Ketten zugewandt sind, mit jeweils einem Deckel abgeschlossen. Mittels der Deckel wird das Siebelement schließlich an den Kettengliedern befestigt, insbesondere angeschraubt. Das Siebelement ist dadurch fest, d.h. unbeweglich mit jeweils einem Kettenglied an einem Ende des Siebelementes verbunden und somit integraler Bestandteil der beiden Ketten der Vorrichtung. Über die Siebelemente sind die beiden Ketten fest und parallel miteinander verbunden, so daß eine starre Einheit geschaffen wird, welche lediglich an den Gelenken der Kettenglieder, welche ebenfalls axial einander zugeordnet,sind, abknickbar und damit an Umlenkrädern umlenkbar ist.

Um das Siebelement weiter zu verstärken, ist auf der Seite, welche den Ketten zugewandt ist, zumindest eines, vorzugsweise mehrere Verstärkungsbleche angeordnet. Die Verstärkungsbleche können dabei gleichzeitig als Teil des Hohlraums, welcher beim Überlappen der Siebelemente entsteht, bzw. als deren Wand, dienen. Die Verstärkungsbleche bewirken darüber hinaus, daß die Siebelemente auch dem Strömungsdruck der Flüssigkeit Stand halten können, ohne daß sie beispielsweise verbiegen und dadurch einen undefinierten Spalt zwischen den Siebelementen öffnen würden.

Um eine besonders gute Verbindung der Verstärkungsbleche mit dem Siebelement schaffen zu können, ist es vorteilhaft, wenn die Verstärkungsbleche an ungelochten Flächen des Siebelementes befestigt, insbesondere angeschweißt sind.

Besonders vorteilhaft ist es, wenn zumindest einzelne der Siebelemente, beispielsweise jedes fünfte Siebelement auf der Seite, welche den Ketten abgewandt ist, einen Rechen aufweisen. Mit Hilfe des Rechens können auch größere und schwerere Verunreinigungen der Flüssigkeit aus der Flüssigkeit abtransportiert werden, indem diese Teile von dem im wesentlichen rechtwinklig von den Siebelementen abstehenden Rechen aufgegriffen und herausgehoben werden.

Unabhängig von der Überlappung der Siebelemente ist es bei einer Vorrichtung zum Abscheiden und Abtransport von Abscheidegut aus einer strömenden Flüssigkeit mit zwei endlosen, in die Flüssigkeit eintauchenden umlaufenden Ketten, welche jeweils Kettenglieder aufweisen, die mittels Gelenken miteinander verbunden sind und zwischen den Ketten angeordneten Siebelementen, die jeweils an einem Kettenglied einer jeden Kette feststehend befestigt sind, erfinderisch und vorteilhaft, wenn zwischen den Enden des Siebelementes, welche den Ketten zugewandt sind und einer die Kette überdeckenden Gehäusewand eine Bürste und/oder Dichtbürste angeordnet ist.

Besonders vorteilhaft ist es selbstverständlich, wenn die Anordnung der Bürste und die Überlappung der Siebelemente kombiniert angewandt werden, da hierdurch der besondere Effekt entsteht, daß weder zwischen den einzelnen Siebelementen, noch seitlich der Abscheidevorrichtung Abscheidegut an der Vorrichtung vorbeiströmen und das nachfolgende Wasser verunreinigen kann. Durch die Anordnung der Bürste an der bereits relativ eng ausgebildeten Stelle zwischen der Gehäusewand der Vorrichtung und den sich relativ dazu bewegenden Siebelementen wird eine besonders gute Reinigungswirkung erzielt. Abscheidegut wird weitgehend davon abgehalten an den Bürsten vorbei in den Bereich hinter die Abscheidevorrichtung zu gelangen.

Die Reinigungswirkung der Bürste wird besonders intensiv, wenn sie derart angeordnet ist, daß sie mit ihren Bürstenspitzen an den Kettengliedern und mit ihren Seiten an der Gehäusewand und/oder den Enden des Siebelementes, insbesondere an dessen Deckeln, anliegt. Hierdurch wird der Spalt zwischen den Siebelementen, der Kette und der Gehäusewand nahezu vollständig mit den Bürsten ausgefüllt und hat darüber hinaus Reibungskontakt, so daß eine gute Dichtwirkung gegenüber dem Abscheidegut erzielt wird.

Für eine sehr gute Abdichtung ist es ausreichend, wenn die Bürstenspitzen nur an den Kettengliedern anliegen, an welchen die Siebelemente befestigt sind. Diese den Siebelementen zugeordneten Kettenglieder sind die von der Flüssigkeit zuerst angeströmten Kettenglieder und können somit bereits hier zuverlässig eine Abdichtung mit den Bürstenspitzen bewirken.

Ist die Bürste an einer der Stirnseite des Siebelementes zugewandten Seite der Gehäusewand angeordnet, so ragen die Bürstenspitzen in den Spalt zwischen Siebelement und Gehäusewand hinein und dichten somit diesen Spalt weitgehend ab.

Meist ist es ausreichend, wenn die Bürste lediglich auf der Strömung zugewandten Seite der Abscheidevorrichtung im Bereich der Flüssigkeit zugeordnet ist. Die übrigen Teile der Abscheidevorrichtung müssen von der Bürste nicht abgedeckt und gegenüber dem Abscheidegut abgedichtet werden.

Im Folgenden wird die Erfindung anhand von Ausführungsbeispielen beschrieben. Es zeigt
- **Figur 1**: eine Seitenansicht einer erfindungsgemäßen Vorrichtung,
- **Figur 2**: eine Detailansicht der Siebelemente an den Ketten im Querschnitt und
- **Figur 3**: ein Detail der Anordnung der Reinigungs- und Dichtbürsten im Querschnitt.

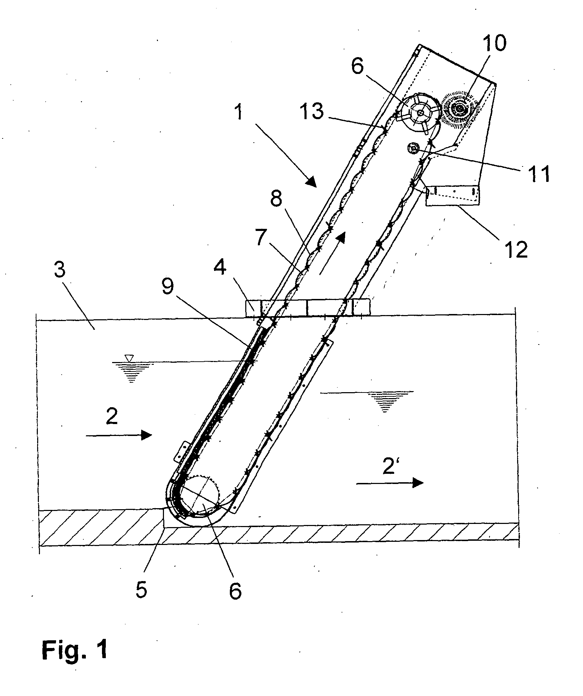

Figur 1 zeigt einen Querschnitt durch die Seitenansicht einer Abscheidevorrichtung 1, welche häufig auch als Umlaufrechen bezeichnet wird. Die Abscheidevorrichtung 1 ist teilweise in einer in Pfeilrichtung strömenden Flüssigkeit 2 in einem Kanal 3 eingetaucht. Die Flüssigkeit 2 weist vor der Abscheidevorrichtung 1 ein höheres Niveau als hinter der Abscheidevorrichtung 1 auf, da sich das Wasser 2 vor der Abscheidevorrichtung 1 aufstaut und verzögert durch die Abscheidevorrichtung 1 hindurchläuft. Die Abscheidevorrichtung 1 ist mit einem Halter 4 an dem Kanal 3 befestigt. Zum Vermeiden von Ablagerungen ist die Abscheidevorrichtung 1 an einem Sohlsprung 5 angeordnet. Hierdurch wird eine bessere Hydraulik erreicht.

Die Abscheidevorrichtung 1 besteht im wesentlichen aus einem Förderband, welches an zwei Umlenkrollen 6 umgelenkt wird. Das endlose Förderband besteht aus zwei zueinander parallel verlaufenden Ketten 7, von welchen in der Darstellung der Figur 1 lediglich eine Kette sichtbar ist und eine Vielzahl daran angeordneter Siebelemente 8. Im Bereich der unteren Umlenkrolle 6 ist auf der Seite, welche der Strömung zugewandt ist, im Bereich einer jeden Kette 7 jeweils eine Bürste 9 angeordnet. Die Bürste 9 bewirkt einerseits die Reinigung der Kette 7 und andererseits die Abdichtung zur Flüssigkeit 2', da die Bürsten 9 verhindern, daß seitlich an der Abscheidevorrichtung 1 zwischen der Abscheidevorrichtung 1 und dem Kanal 3 abzuscheidendes Gut vorbeiströmen kann.

Im Bereich der oberen Umlenkrolle 6 ist eine weitere Bürste 10 angeordnet, welche angetrieben wird. Die Bürste 10 bewirkt ein Abstreifen des an den Siebelementen 8 anhaftenden Abscheidegutes und gleichzeitig ein Reinigen der Siebelemente 8. Eine zusätzliche Reinigung der Siebelemente 8 und dadurch ein Abstoßen des Abscheidegutes von den Siebelementen 8 bewirken mehrere Düsen 11, welche von der Innenseite der Abscheidevorrichtung 1 gegen die Siebelemente 8 Flüssigkeit spritzen und somit die Sieblöcher sowie die Innenseite der Siebelemente 8 säubern. Das von den Siebelementen 8 abgelöste Abscheidegut und die Reinigungsflüssigkeit wird über einen Schacht 12 aus der Abscheidevorrichtung 1 abgeführt und einer nicht dargestellten Transportvorrichtung oder einem Abfallbehälter zugeführt.

Um auch schwereres Abscheidegut, wie beispielsweise Steine, aus der Flüssigkeit 2 herausfördern zu können, ist an jedem fünften Siebelement 8 ein Rechen 13 angeordnet. Das Abscheidegut wird von dem Rechen 13 gehalten und ebenfalls bis über die obere Umlenkrolle 6 bewegt und fällt sodann durch den Schacht 12 in die zum Abtransport vorgesehene Vorrichtung.

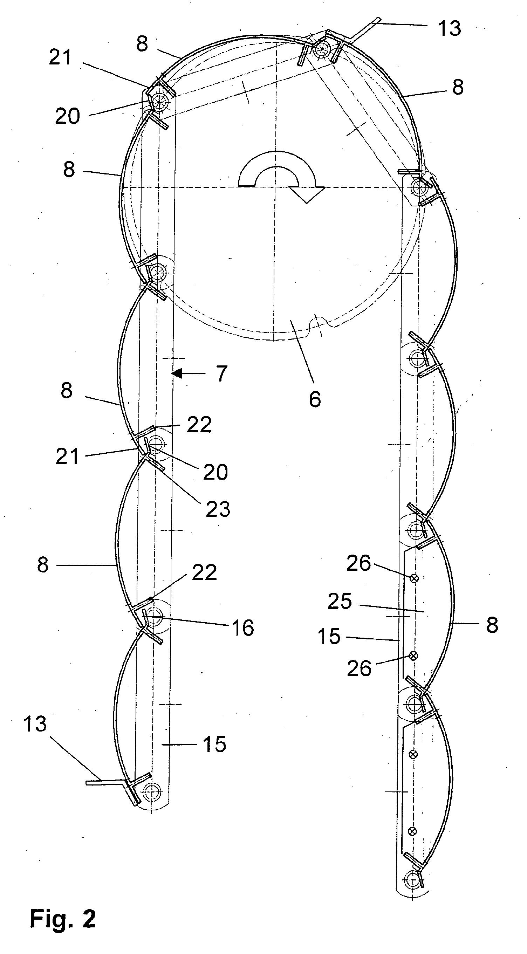

Figur 2 zeigt ein Detail im Bereich der oberen Umlenkrolle 6 der Abscheidevorrichtung 1. In Vertiefungen der Umlenkrolle 6 greifen Gelenkachsen 16 ein, mit welchen Kettenglieder 15 der Kette 7 gelenkig miteinander verbunden sind. Die Kettenglieder 15 weisen jeweils eine Länge auf, welche im wesentlichen der Länge eines Siebelementes 8 entspricht. Im Bereich der Gelenkachsen 16 überlappen sich zwei benachbarte Siebelemente 8, so daß eine Art Labyrinthdichtung bezüglich der gegen die Siebelemente 8 strömenden Flüssigkeit 2 entsteht. Die Überlappung entsteht durch ein abgekantetes Ende 20 des ersten Siebelementes 8 und dem anderen Ende 21 des nachfolgenden Siebelementes 8.

Die Oberfläche der Siebelemente 8 ist gewölbt, so daß die Aufnahme von Abscheidegut verbessert ist. Zur Stabilisierung des Siebelementes 8 dient einerseits das abgekantete Ende 20 und andererseits neben der Wölbung des Siebelementes 8 auch Verstärkungsbleche 22 und 23, welche von der Sammelfläche des Siebelementes 8 in Richtung auf die Kette 7 hin angeordnet sind. Die eigentliche Siebfläche des Siebelementes 8 befindet sich zwischen den beiden Verstärkungsblechen 22 und 23. Ab dem Bereich, in welchem die Verstärkungsbleche 22 und 23 an dem Siebelement 8 angeordnet sind, ist das Siebelement 8 ungelocht, wodurch an den Überlappungsstellen der Siebelemente 8 das Durchströmen der Flüssigkeit 2 weitgehend verhindert wird und darüber hinaus die Befestigung der Verstärkungselemente 22 erleichtert wird. Zwischen den Enden 20 und 21 und dem Verstärkungsblech 22 entsteht ein Hohlraum, welcher in der Art einer Labyrinthdichtung wirkt. Darüber hinaus reicht das Ende 21 des einen Siebelementes 8 sehr nah an die Oberfläche des anderen benachbarten Siebelementes 8 heran, so daß auch hier bereits eine gewisse Dichtwirkung entsteht.

Im Bereich der Umlenkrolle 6 wandern die beiden Enden 20 und 21 so aneinander vorbei, daß der Hohlraum zwischen den Enden 20 und 21 und dem Verstärkungsblech 22 aufgelöst wird und eine im wesentlichen ununterbrochene, fortlaufende Oberfläche der Siebelemente 8 bildet. Diese Oberfläche kann durch die Bürste 10 sehr einfach gereinigt werden, so daß bei einem erneuten Umlauf der Kette der Hohlraum zwischen den überlappenden Enden der Siebelemente 8 wieder voll funktionsfähig ist. Durch das nahe aneinander stehen der Siebelemente auch in dieser Position wird sichergestellt, daß kein von den Siebelementen 8 abgelöstes Abscheidegut zwischen die beiden Kettentrum und damit wieder in die bereits gereinigte Flüssigkeit fällt.

Um den Verschleiß und auch die Geräuschentwicklung möglichst gering zu halten, berühren sich die Enden 20 und 21 der Siebelemente 8 nicht, sondern stehen nur nahe aneinander. Durch das berührungslose Überlappen in Verbindung mit der Labyrinthdichtung wird ein Eindringen von Abscheidegut in den Spalt zwischen zwei Siebelementen 8 wirkungsvoll verhindert.

An zwei Siebelementen 8 sind exemplarisch Deckel 25 eingezeichnet, welche das Siebelement 8 an seinen beiden, den Ketten 7 zugewandten Enden abschließen. Die Deckel 25 sind mit dem Siebelement 8 verschweißt. Mit Schrauben 26 ist der Deckel 25 und damit das Siebelement 8 an einem Kettenglied 15 angeschraubt und bildet somit eine feste Verbindung des Siebelementes 8 mit der Kette 7. Das Siebelement 8 und das Kettenglied 15 bilden eine relativ zueinander unbewegliche Einheit.

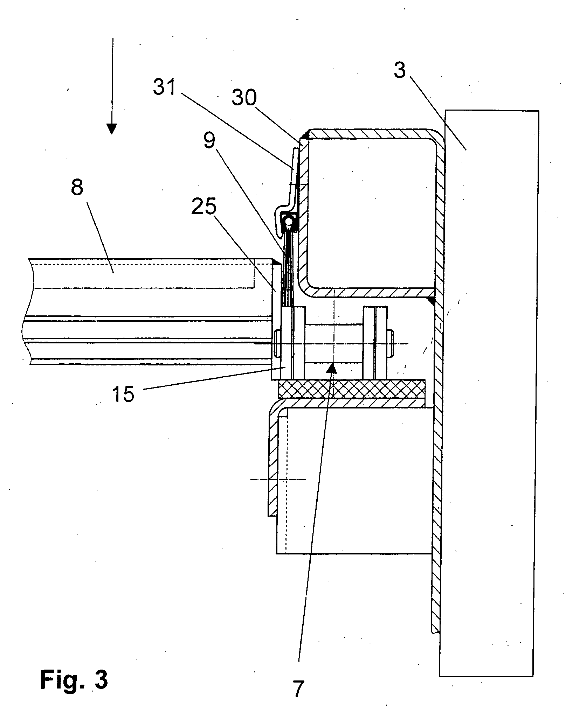

Figur 3 zeigt einen Ausschnitt aus dem Bereich der unteren Umlenkung, in welchem eine Bürste 9 angeordnet ist. Der auf das Siebelement 8 gerichtete Pfeil deutet die Strömungsrichtung auf das Siebelement 8 an. Die Bürste 9 drückt mit den Bürstenspitzen auf das Kettenglied 15, welches dem Deckel 25 des Siebelementes 8 zugeordnet ist. Darüber hinaus ist die Bürste 9 in dem Spalt zwischen dem Deckel 25 und einer Gehäusewand 30 angeordnet und dichtet somit weitgehend den Spalt ab, so daß Verunreinigungen in der Flüssigkeit, welche in der Abscheidevorrichtung 1 abgeschieden werden sollen, nicht in den Spalt eindringen können. Das Siebelement 9 ist dabei mit einem Klemmblech 31 an der Seite der Gehäusewand 30 angeordnet, welche der Stirnseite des Siebelementes 8 bzw. dem Deckel 25 zugewandt ist. Hierdurch wird eine seitliche Stabilisierung der Bürstenelemente der Bürste 9 erzielt, wodurch zusätzlich die Abdichtung des Siebelementes 8 gegenüber der Gehäusewand 30, welche an dem Kanal 3 angeordnet ist, bewirkt werden.

Die Bürste 9 sorgt somit ebenso wie der überlappende Bereich der einzelnen Siebelemente 8 dafür, daß der Bereich hinter dem Siebelement 8 weitgehend gegenüber Feststoffen abgedichtet ist und somit eine hervorragende Reinigung der Flüssigkeit erfolgen kann.

Die vorliegende Erfindung ist nicht auf die dargestellten Ausführungsbeispiele beschränkt. Abwandlungen, insbesondere in der Gestaltung der Siebelemente fallen entsprechend der Formulierung der Patentansprüche ebenso in den Schutzumfang der vorliegenden Erfindung. So kann insbesondere die Überlappung der Siebelemente 8 nicht nur in der gezeigten Art und Weise mit gleichen Siebelementen 8, sondern auch abwechselnd mit größeren und kleineren Siebelementen 8 erfolgen, welche ebenfalls eine Überlappung bilden können. Dargestellt wurde in den Ausführungsbeispielen lediglich die derzeit bevorzugte Ausführung der Erfindung.

## Patentansprüche

1. Vorrichtung zum Abscheiden und Abtransport von Abscheidegut aus einer strömenden Flüssigkeit (2), beispielsweise Abwasser, mit zwei endlosen, in die Flüssigkeit (2) eintauchenden, umlaufenden ,Ketten (7), welche jeweils Kettenglieder (15) aufweisen, die mittels Gelenken (16) miteinander verbunden sind und zwischen den Ketten (7) angeordneten Siebelementen (8), die jeweils an einem Kettenglied (15) einer jeden Kette (7) feststehend befestigt sind, **dadurch gekennzeichnet, daß** sich benachbarte Siebelemente (8) in Laufrichtung der Kette (7) im Bereich der Gelenke (16) der Kettenglieder (15) überlappen.

2. Vorrichtung nach Anspruch 1, **dadurch gekennzeichnet, daß** sich die benachbarten Siebelemente (8) berührungslos überlappen.

3. Vorrichtung nach einem oder mehreren der vorherigen Ansprüche, **dadurch gekennzeichnet, daß** die sich überlappenden Siebelemente (8) im geradlinigen Verlauf der Ketten (7) einen im wesentlichen geschlossenen Hohlraum bilden.

4. Vorrichtung nach einem oder mehreren der vorherigen Ansprüche, **dadurch gekennzeichnet, daß** die sich überlappenden Siebelemente (8) im Bereich der Umlenkung der Ketten (7) einen offenen Hohlraum oder eine im wesentlichen ununterbrochene, fortlaufende Oberfläche bilden.

5. Vorrichtung nach einem oder mehreren der vorherigen Ansprüche, **dadurch gekennzeichnet, daß** der Vorrichtung im Bereich der Umlenkung der Ketten (7) eine insbesondere rotierende Bürste zugeordnet ist zum Reinigen des geöffneten Hohlraums oder der im wesentlichen ununterbrochenen, fortlaufenden Oberfläche.

6. Vorrichtung nach einem oder mehreren der vorherigen Ansprüche, **dadurch gekennzeichnet, daß** das Siebelement (8) im wesentlichen außerhalb der Ebene der Ketten (7) liegen.

7. Vorrichtung nach einem oder mehreren der vorherigen Ansprüche, **dadurch gekennzeichnet, daß** das Siebelement (8) gelochte Siebflächen aufweist.

8. Vorrichtung nach einem oder mehreren der vorherigen Ansprüche, **dadurch gekennzeichnet, daß** die einander zugewandten Enden (20,21) benachbarter Siebelemente (8) im Bereich ihrer Überlappung ungelocht sind.

9. Vorrichtung nach einem oder mehreren der vorherigen Ansprüche, **dadurch gekennzeichnet, daß** zumindest ein Ende (20) des Siebelementes (8) in Richtung auf das benachbarte Siebelement (8) abgekantet ist.

10. Vorrichtung nach einem oder mehreren der vorherigen Ansprüche, **dadurch gekennzeichnet, daß** das Siebelement (8) in von der Kette (7) abgewandter Richtung gewölbt ausgebildet ist.

11. Vorrichtung nach einem oder mehreren der vorherigen Ansprüche, **dadurch gekennzeichnet, daß** das Siebelement (8) an den Enden, welche den Ketten (7) zugewandt sind, mit jeweils einem Deckel (25) abgeschlossen ist.

12. Vorrichtung nach einem oder mehreren der vorherigen Ansprüche, **dadurch gekennzeichnet, daß** das Siebelement (8) mittels der Deckel (25) an den Kettengliedern (15) befestigt ist.

13. Vorrichtung nach einem oder mehreren der vorherigen Ansprüche, **dadurch gekennzeichnet, daß** das Siebelement (8) auf der Seite, welche den Ketten (7) zugewandt ist, Verstärkungsbleche (22,23) aufweist.

14. Vorrichtung nach einem oder mehreren der vorherigen Ansprüche, **dadurch gekennzeichnet, daß** die Verstärkungsbleche (22,23) an ungelochten Bereichen des Siebelementes (8) angeordnet sind.

15. Vorrichtung nach einem oder mehreren der vorherigen Ansprüche, **dadurch gekennzeichnet, daß** wenigstens einige der Siebelemente (8) auf der Seite, welche den Ketten (7) abgewandt ist, einen Rechen (13) aufweisen.

16. Vorrichtung insbesondere nach einem oder mehreren der vorherigen Ansprüche, **dadurch gekennzeichnet, daß** zwischen den Enden des Siebelementes (8), welche den Ketten (7) zugewandt sind und einer die Ketten (7) überdeckenden Gehäusewand (30) eine Bürste (9) zum Reinigen der Befestigung der Siebelemente (8) und/oder Abdichten der Vorrichtung angeordnet ist.

17. Vorrichtung nach einem oder mehreren der vorherigen Ansprüche, **dadurch gekennzeichnet, daß** die Bürste (9) mit ihren Bürstenspitzen an den Kettengliedern (15) und mit ihren Seiten an der Gehäusewand (30) und/oder Enden des Siebelementes (8), insbesondere an dessen Dekkein (25) anliegt.

18. Vorrichtung nach einem oder mehreren der vorherigen Ansprüche, **dadurch gekennzeichnet, daß** die Bürstenspitzen nur an den Kettengliedern (15) anliegen, an welchen die Siebelemente (8) befestigt sind.

19. Vorrichtung nach einem oder mehreren der vorherigen Ansprüche, **dadurch gekennzeichnet, daß** die Bürste (9) an einer der Stirnseite des Siebelementes (8) zugewandten Seite der Gehäusewand (30) angeordnet ist.
